# EUROPEAN PATENT APPLICATION

(11) **EP 4 796 269 A1**
(43) Date of publication of application: **26.08.2026**
(21) Application number: 26155694.8
(22) Date of filing: 02.02.2026
(51) Int. Cl.: B25J 9/16, G05B 19/42, G05B 19/423

(54) **TEACHING APPARATUS**

(30) Priority: 20.02.2025 JP 2025026125
(71) Applicant: DAIHEN Corporation, Yodogawa-ku Osaka-shi Osaka 532-8512 (JP)
(72) Inventor: FUJISAWA, Sho, Osaka-shi, Osaka 532-8512 (JP)
(74) Representative: Manitz Finsterwald Patent- und Rechtsanwaltspartnerschaft mbB

(57) **Abstract**

To provide a teaching apparatus capable of improving work efficiency of teaching an operation to a welding robot.

A teaching apparatus includes: a trajectory generating portion that generates an operation trajectory of a welding robot, the operation trajectory starting at a predetermined position of a welding torch, and passing through a plurality of teaching points, and moreover ending at a predetermined position of the welding torch; and a display control portion that displays the generated operation trajectory by superimposing the operation trajectory on an object to be welded contained in an image captured by an imaging portion, wherein the trajectory generating portion generates one or more waypoints between each pair of adjacent teaching points.

## Description

### Background

### Field

The present invention relates to a teaching apparatus.

### Description of Related Art

Patent Publication JP-A-2019-150930 discloses an operation teaching system for teaching an operation to a welding robot. In the operation teaching system, a welding torch on a tip of a manipulator is replaced with a photographing portion when teaching an operation. In addition, based on positional information of a welding location generated based on an image photographed by the photographing portion and positional and postural information of the manipulator at the time of photography of the photographed image, an operation trajectory of the position and the posture of the manipulator necessary for welding the welding location is generated, and teaching data is generated by combining operation trajectories of respective welding locations.

### Summary

In the operation teaching system according to Patent Publication JP-A-2019-150930, a task of drawing a line (welding line) indicating a welding location, which is to be an object of the operation trajectory, on an object to be welded is performed before teaching the operation. This task is performed by an operator who uses a pen to draw the welding line on the object to be welded. Therefore, not only does the task take time but there is also a risk that a line drawn with a pen may remain on the surface of the object to be welded.

In consideration thereof, an object of the present invention is to provide a teaching apparatus capable of improving work efficiency of teaching an operation to a welding robot.

A teaching apparatus according to an aspect of the present invention includes: a trajectory generating portion that generates an operation trajectory of a welding robot, the operation trajectory starting at a predetermined position of a welding torch, and passing through a plurality of teaching points, and moreover ending at a predetermined position of the welding torch; and a display control portion that displays the generated operation trajectory by superimposing the operation trajectory on an object to be welded contained in an image captured by an imaging portion, wherein the trajectory generating portion generates one or more waypoints between each pair of adjacent teaching points.

According to this aspect, when an operator teaches a plurality of teaching points, the operation trajectory of the welding robot that starts at the predetermined position of a welding torch, passes through the plurality of teaching points, and returns to the predetermined position of the welding torch is generated and, in doing so, the operation trajectory can be generated by adding one or more waypoints between each pair of adjacent teaching points, and the generated operation trajectory can be displayed by superimposing the generated operation trajectory on an object to be welded included in a captured image. Accordingly, the operator can reduce the effort required to generate the operation trajectory of the welding robot.

In the aspect described above, the teaching point may be taught by direct manipulation in which the welding robot is moved and manipulated in response to external forces applied to the welding robot by the operator.

According to this aspect, the operator can teach a plurality of teaching points at desired positions while directly manipulating the welding robot.

In the aspect described above, the display control portion may visually differentiate a display mode of the waypoint from a display mode of the teaching point so that the waypoint stands out more prominently than the teaching point.

According to this aspect, in addition to the teaching points taught by the operator, waypoints generated by the teaching apparatus can be displayed in a display mode that can be readily visually confirmed by the operator.

In the aspect described above, when generating a waypoint before or after an intermediate teaching point, which is a teaching point excluding teaching points at a start position of a weld and an end position of the weld, the trajectory generating portion may calculate a distance between the waypoint to be generated and the intermediate teaching point, based on a distance between another teaching point positioned adjacent on a near side or a far side of the intermediate teaching point and the intermediate teaching point or a welding speed.

According to this aspect, waypoints generated before and after an intermediate teaching point can be generated at appropriate positions according to a size of the object to be welded and a welding speed without requiring additional effort from the operator.

In the aspect described above, when generating an approach point to be generated on a near side of a start position of a weld or a retreat point to be generated on a far side of an end position of the weld, the trajectory generating portion may generate the approach point or the retreat point by adjusting a movement direction of the welding torch so that the welding robot can move without interfering with an object when moving the welding torch from the approach point toward the teaching point, which is to be the start position of the weld, or when moving the welding torch from the teaching point, which is to be the end position of the weld, toward the retreat point.

According to this aspect, approach points and retreat points can be generated at appropriate positions according to a shape of the object to be welded and the like without requiring additional effort from the operator.

In the aspect described above, the display control portion may visually differentiate a display mode for an operation trajectory by air cutting, in which a welding torch is moved without generating an arc, from a display mode for the operation trajectory other than the operation trajectory by the air cutting.

According to this aspect, the operation trajectory of a weld section and the operation trajectory of the air cutting can be displayed in display modes that enable the operator to readily visually distinguish the operation trajectories.

In the aspect described above, when generating the operation trajectory by the air cutting, the trajectory generating portion may adjust a movement direction of the welding torch so that the welding robot operated by the air cutting does not interfere with an object.

According to this aspect, an operation trajectory that enables the welding robot operated by air cutting to move without interfering with an object can be generated without requiring additional effort from the operator.

In the aspect described above, the trajectory generating portion may generate, on the image, waypoints at positions indicated by the operator.

According to this aspect, waypoints can be generated at any position designated by the operator.

In the aspect described above, the trajectory generating portion may generate the waypoints by the number set by the operator between the teaching points.

According to this aspect, waypoints by any number designated by the operator can be generated between the teaching points.

According to the present invention, a teaching apparatus capable of improving work efficiency of teaching an operation to a welding robot can be provided.

### Brief Description of Drawings

FIG. 1 is a diagram illustrating a schematic configuration of a robot teaching system including a teaching apparatus according to an embodiment;
FIG. 2 is a schematic diagram for describing teaching points provided on a workpiece;
FIG. 3 is a schematic diagram for describing waypoints; and
FIG. 4 is a schematic diagram showing an example of operation trajectories displayed overlapped on workpieces included in a photographed image.

### Detailed Description

A preferred embodiment of the present invention will be described with reference to the accompanying drawings. Note that elements designated by same reference characters in the drawings have identical or substantially identical configurations. In addition, since the drawings are schematic in nature, dimensions and proportions of each component may differ from actual dimensions and proportions.

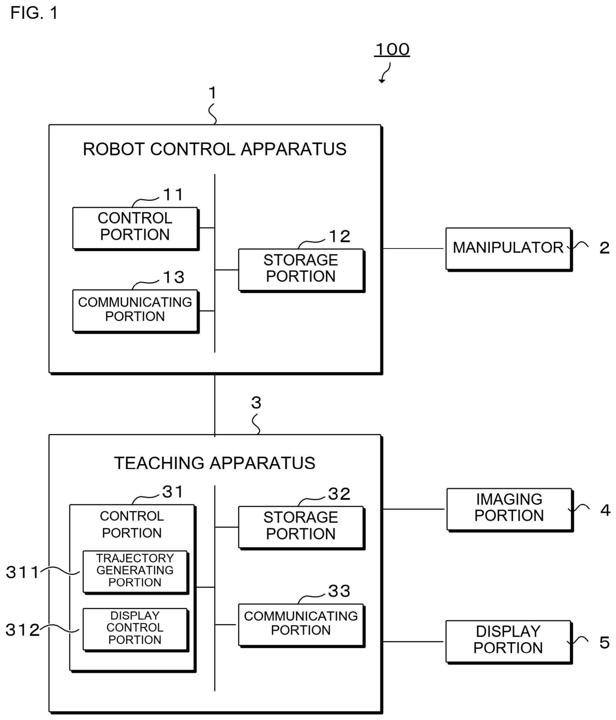

FIG. 1 is a diagram illustrating a schematic configuration of a robot teaching system 100 including a teaching apparatus 3 according to an embodiment. For example, the robot teaching system 100 includes a robot control apparatus 1, a manipulator 2, the teaching apparatus 3, an imaging portion 4, and a display portion 5. Note that a configuration may be adopted in which the imaging portion 4 and the display portion 5 are included in the teaching apparatus 3.

The robot control apparatus 1 and the teaching apparatus 3, the robot control apparatus 1 and the manipulator 2, and the teaching apparatus 3, the imaging portion 4, and the display portion 5 are connected via a cable, wireless communication, or the like, respectively.

The manipulator 2 is a welding robot that performs arc welding on a workpiece (base material) that is an object to be welded according to work conditions for welding set by the robot control apparatus 1. For example, the manipulator 2 has an articulated arm provided on a base member fixed to a factory floor or the like, and a welding torch coupled to a tip of the articulated arm as one of the work tools.

The manipulator 2 is also a collaborative robot that is designed to work with people and is operable in response to external forces. An operator can also directly manipulate (directly teach) the manipulator 2 by applying an external force directly to the manipulator 2 by hand and moving the manipulator 2 in accordance with the external force. Note that welding robots according to the present invention include both robots requiring safety barriers that are not designed for human collaboration and collaborative robots designed for human collaboration.

The robot control apparatus 1 is a control unit that controls operations of the manipulator 2 according to work conditions for welding set in advance. For example, work conditions for welding include data items such as welding conditions, a weld start position, a weld end position, a welding distance, and a position and a posture of the welding torch. For example, the welding conditions include data items such as a welding current, a welding voltage, a welding speed, a wire feed speed, and a workpiece thickness.

For example, the robot control apparatus 1 includes a control portion 11, a storage portion 12, and a communicating portion 13. The control portion 11 is a processor and controls the manipulator 2 by executing a work program or the like stored in the storage portion 12.

The storage portion 12 is a computer-readable recording medium which stores a program for realizing various functions of the robot control apparatus 1, various kinds of data used by the program, and the like. The communicating portion 13 is a communication interface which controls communication with the manipulator 2 and the teaching apparatus 3 that are connected via the network or the like.

Note that the robot control apparatus 1 may further include a welding power supply portion. For example, the welding power supply portion supplies a welding current, a welding voltage, and the like to the manipulator 2 in accordance with predetermined welding work conditions to generate an arc between the tip of a welding wire and a workpiece. Note that the welding power supply portion may be separate from the robot control apparatus 1.

The teaching apparatus 3 is an apparatus which executes processing such as when the operator teaches an operation of the manipulator 2 and, for example, the teaching apparatus 3 is a tablet-type teach pendant. For example, the teaching apparatus 3 includes a control portion 31, a storage portion 32, and a communicating portion 33.

The control portion 31 is a processor and controls each portion of the teaching apparatus 3 by executing a program stored in the storage portion 32. Functions of the control portion 31 will be described later.

The storage portion 32 is a computer-readable recording medium which stores a program for realizing various functions of the teaching apparatus 3, various kinds of data used by the program, and the like. The communicating portion 33 is a communication interface which controls communication with the robot control apparatus 1, the imaging portion 4, and the display portion 5 that are connected via the network.

For example, the imaging portion 4 is a 3D camera equipped with a distance measurement sensor and also functions as a 2D camera. The imaging portion 4 is preferably positioned at a position where a workspace including at least a workpiece can be photographed. Note that the imaging portion 4 may be included in the teaching apparatus 3.

The distance measurement sensor is a sensor capable of measuring a distance to an object. As the distance measurement sensor, for example, a LiDAR (Light Detection and Ranging) sensor, a millimeter wave sensor, an ultrasonic sensor, or the like can be used.

Here, the imaging portion 4 need not necessarily be equipped with a distance measurement sensor, the distance measurement sensor may be separately provided from the imaging portion 4, or the distance measurement sensor may be omitted. When omitting the distance measurement sensor, it is preferable to calculate three-dimensional coordinate data corresponding to an object based on a plurality of images taken of the object from a plurality of different positions. In this case, known three-dimensional measurement methods using a stereo method can be used.

For example, the display portion 5 is a display apparatus including a touch panel which displays images (2D and 3D) of a subject captured by the imaging portion 4 and which accepts input of a manipulation instruction and the like by the operator. Note that the display portion 5 may be included in the teaching apparatus 3.

As shown in FIG. 1, for example, the control portion 31 of the teaching apparatus 3 may include a trajectory generating portion 311 and a display control portion 312 as functional components.

The trajectory generating portion 311 generates an operation trajectory of the manipulator 2 starting at a predetermined tip position of a welding torch, passing through a plurality of teaching points, and ending at a predetermined tip position of the welding torch.

As the predetermined tip position of the welding torch, for example, preferably, a tip position of the welding torch of the manipulator 2 included in an image captured by the imaging portion 4 is registered and the registered position is used as a home position (origin position).

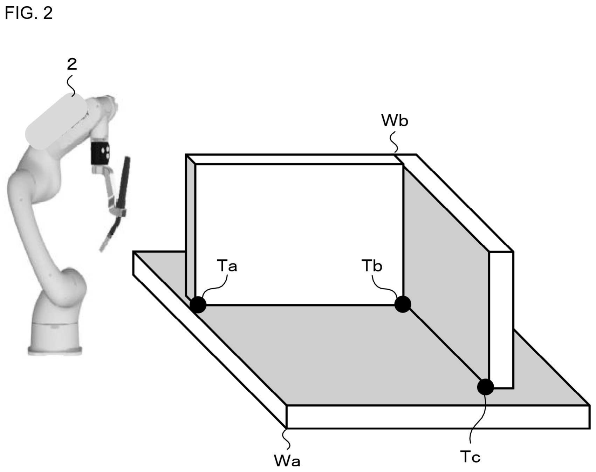

Teaching points are taught by direct manipulation in which the manipulator 2 is moved and manipulated in response to external forces applied to the manipulator 2 by the operator. A specific description will be provided with reference to FIG. 2.

FIG. 2 shows three teaching points: Ta, Tb, and Tc. The three-teaching points Ta, Tb, and Tc are provided at both ends and a corner of a welding line formed along intersecting lines of a workpiece Wa that is a bottom plate and a workpiece Wb with an L-shape. Specifically, the teaching point Ta is provided at a weld start position, the teaching point Tb is provided at the corner of the L-shape, and the teaching point Tc is provided at a weld end position. Here, teaching points other than the teaching points provided at the weld start position and the weld end position (for example, the teaching point Tb) are also referred to as intermediate teaching points.

Note that the teaching points may be taught using a general teach pendant or set by detecting planes or intersecting lines between planes from point cloud data or image data of a workpiece that can be specified based on coordinates in a robot coordinate system. In the case of the latter, preferably, a marker (for example, an AR marker) of which a positional relationship with the manipulator 2 is fixed and which can be specified based on coordinates in the robot coordinate system is arranged near the workpiece and the workpiece and the marker are photographed by the imaging portion 4. Accordingly, based on a specific position of the marker (for example, a center or a corner of the marker), a position of the workpiece or a virtual model of the manipulator 2 displayed on the screen together with the marker can be specified as a position in the robot coordinate system.

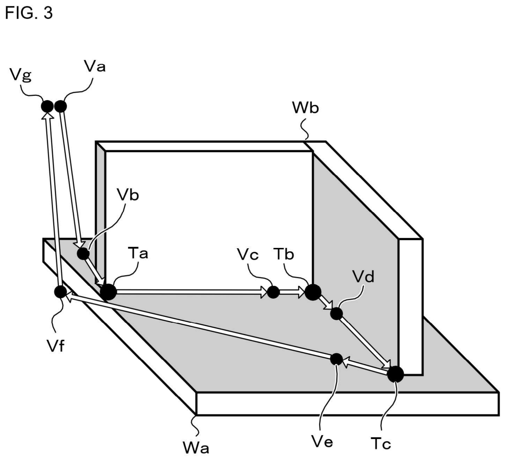

When generating an operation trajectory of the manipulator 2 that passes through teaching points, the trajectory generating portion 311 shown in FIG. 1 generates a plurality of waypoints other than the teaching points. A specific description will be provided with reference to FIG. 3.

FIG. 3 displays, as waypoints, an operation start point Va and an operation end point Vg generated at a home position, an approach point Vb generated on a near side of the teaching point Ta indicating the weld start position, waypoints Vc and Vd generated before and after the intermediate teaching point Tb at the corner, a retreat point Ve formed on a far side of the teaching point Tc indicating the weld end position, and a waypoint Vf generated between the retreat point Ve and the operation end point Vg.

Here, in a corner-winding portion of the workpiece, the welding torch must be moved by changing its posture (advance angle or retreat angle) from a basic posture to prevent the welding torch from colliding with the workpiece. Therefore, a section in which the welding torch is moved by changing its posture from the basic posture is provided before and after the intermediate teaching point Tb at the corner and the waypoints Vc and Vd are provided at a start point and an end point of the section, respectively.

In this case, the welding torch moves in the same basic posture as the weld start position from the teaching point Ta to the waypoint Vc and moves in the same basic posture as the weld end position from the waypoint Vd to the teaching point Tc. In addition, at the intermediate teaching point Tb, an intermediate posture between the basic posture at the weld start position and the basic posture at the weld end position is assumed.

A distance from the waypoint Vc to the intermediate teaching point Tb and a distance from the intermediate teaching point Tb to the waypoint Vd may be the same or may differ from each other. For example, a specific distance such as 20 mm or 30 mm may be arbitrarily determined.

Additionally, when generating the waypoints Vc and Vd, the distance from the waypoint Vc to the intermediate teaching point Tb and the distance from the intermediate teaching point Tb to the waypoint Vd may be changeable based on the distance between the teaching point Ta adjacent to the waypoint Vc to be generated and the intermediate teaching point Tb and the distance between the intermediate teaching point Tb adjacent to the waypoint Vd to be generated and the teaching point Tc. For example, when the distance between adjacent teaching points is shorter than a predetermined distance, the distance may be set shorter than an initially set distance in proportion to the degree of shortening.

Furthermore, when generating the waypoints Vc and Vd, the distance from the waypoint Vc to the intermediate teaching point Tb and the distance from the intermediate teaching point Tb to the waypoint Vd may be changeable based on welding speed. For example, the higher the welding speed, the longer each distance may be.

Here, a section from the teaching point Ta indicating the weld start position to the teaching point Tc indicating the weld end position is a weld section in which the welding torch is moved while generating an arc. On the other hand, a section excluding the weld section in the operation trajectory from the operation start point Va to the operation end point Vg is a section where the welding torch is moved without generating an arc, known as air cutting (no-load movement).

The trajectory generating portion 311 has a function of adjusting a movement direction of the welding torch when generating the operation trajectory by the air cutting so that the manipulator 2 operated by the air cutting can move without interfering with an object. This function will be described below.

Positions of the approach point Vb and the retreat point Ve are set in advance using the weld start position and the weld end position as references. For example, the approach point Vb and the retreat point Ve are set at a position (specific position) where the tip of the welding torch is retracted, for example, 50 mm in the direction away from the welding position along a longitudinal direction of the welding torch (tool Z direction) from the teaching point Ta indicating the weld start position or the teaching point Tc indicating the weld end position.

If the manipulator 2 interferes with an object when setting the approach point Vb and the retreat point Ve, the welding torch may be pulled continuously in the longitudinal direction of the welding torch until the interference with the object is resolved, or the direction in which the welding torch is pulled may be changed to another direction. In doing so, preferably, the welding torch is adjusted and pulled in a direction that shortens a takt time (movement time).

Whether or not the manipulator 2 interferes with an object can be determined by simulating a virtual model of the manipulator 2. A 3D model of the manipulator 2 can be used as the virtual model of the manipulator 2. An image, a picture, a photographed image, and the like may be used as the virtual model.

When determining the presence or absence of interference, whether or not the manipulator 2 interferes with an object may be determined based on whether or not the 3D model of the manipulator 2 comes into contact with (including overlapping) a point cloud data group acquired by a distance measurement sensor. In this case, a determination that the manipulator 2 interferes with an object is made when the 3D model comes into contact with the point cloud data group.

In addition, the trajectory generating portion 311 determines whether or not the manipulator 2 interferes with an object when generating an operation trajectory from the operation start point Va to the approach point Vb or when generating an operation trajectory from the retreat point Ve to the operation end point Vg. In addition, when the manipulator 2 interferes with the object, a new waypoint is generated at a position that enables the manipulator 2 to avoid interfering with the object. A specific description will be provided below.

When generating the operation trajectory from the operation start point Va to the approach point Vb in FIG. 3, since the manipulator 2 does not interfere with an object, the trajectory generating portion 311 does not generate a new waypoint. In this case, the trajectory generating portion 311 generates the operation trajectory from the operation start point Va to the approach point Vb.

On the other hand, when generating the operation trajectory from the retreat point Ve to the operation end point Vg in FIG. 3, since the manipulator 2 interferes with the workpiece Wb, the trajectory generating portion 311 generates a new waypoint Vf. In this case, the trajectory generating portion 311 generates an operation trajectory from the retreat point Ve to the waypoint Vf and an operation trajectory from the waypoint Vf to the operation end point Vg.

Here, when avoiding interference, the manipulator 2 or the welding torch may be moved in the direction of the imaging portion 4 so that the interference is resolved and a new waypoint may be generated at the position to which the manipulator 2 or the welding torch was moved. When the imaging portion 4 is capturing the manipulator 2, since there is no object between the imaging portion 4 and the manipulator 2, the likelihood of the interference being resolved can be increased.

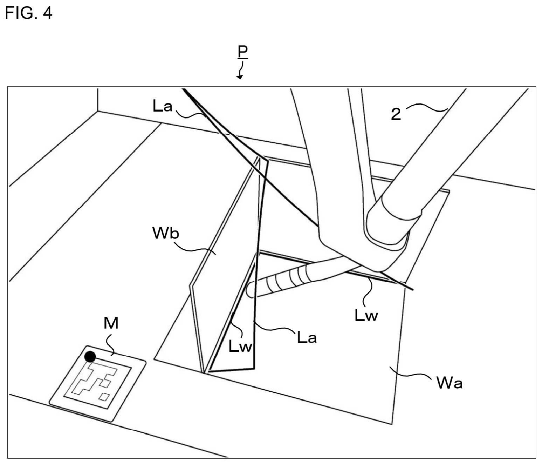

The display control portion 312 shown in FIG. 1 displays the operation trajectory generated by the trajectory generating portion 311 by superimposing the operation trajectory on a workpiece included in a photographed image. A specific description will be provided with reference to FIG. 4.

FIG. 4 is an example of a photographed image P captured by the imaging portion 4. The photographed image P includes the workpiece Wa that is a bottom plate, the workpiece Wb with an L-shape, the manipulator 2, and a marker M. The manipulator 2 may be a virtual model of the manipulator 2 or the actual manipulator 2.

In addition, in the photographed image P, an operation trajectory Lw of the weld section generated so as to align with a welding line formed on an intersecting line of the workpiece Wa and the workpiece Wb and an operation trajectory La generated so as to align with a movement due to air cutting are displayed superimposed on the workpiece Wa and the workpiece Wb.

When displaying the operation trajectory Lw and the operation trajectory La, the display control portion 312 may also display teaching points and waypoints. In doing so, preferably, a display mode of the waypoints are visually differentiated from a display mode of the teaching points so that the waypoints stand out more prominently than the teaching points. For example, the display modes to be differentiated can include colors, patterns, and shapes. Accordingly, in addition to the teaching points taught by the operator, waypoints generated by the trajectory generating portion 311 can be displayed in a display mode that can be readily visually confirmed by the operator.

In addition, preferably, the display control portion 312 visually differentiates a display mode for the operation trajectory La by air cutting from a display mode for the operation trajectory Lw other than the operation trajectory La by the air cutting. Accordingly, the operation trajectory Lw of the weld section and the operation trajectory La of the air cutting can be displayed in display modes that enable the operator to readily visually distinguish the operation trajectories.

As described above, with the teaching apparatus 3 according to the embodiment, when the operator teaches a plurality of teaching points, an operation trajectory of the manipulator 2 that starts at the home position of the welding torch, passes through the plurality of teaching points, and ends at the home position of the welding torch is generated and, in doing so, the operation trajectory can be generated by adding one or more waypoints between each pair of adjacent teaching points, and the generated operation trajectory can be displayed by superimposing the operation trajectory on a workpiece included in a photographed image. Accordingly, the operator can reduce the effort required to generate the operation trajectory of the manipulator 2.

Therefore, with the teaching apparatus 3 according to the embodiment, the work efficiency of teaching operations to the manipulator 2 can be improved.

### Modifications

Note that the present invention is not limited to the embodiment described above and can be implemented in various other forms without departing from the gist of the present invention. Therefore, the embodiment described above is to be considered in all respects as illustrative and not restrictive.

For example, while the trajectory generating portion 311 generates waypoints based on the home position, teaching points, and the like in the embodiment described above, the generation of waypoints is not limited thereto. Waypoints may be further generated at a position indicated (for example, tapped) by the operator on a photographed image. In addition, waypoints displayed on a photographed image may be made movable (for example, dragged) by designating the waypoints.

In addition, while the trajectory generating portion 311 generates one waypoint between each pair of teaching points in the embodiment described above, the number of waypoints to be generated is not limited thereto. The number of waypoints generated between each pair of teaching points may be arbitrarily set by the operator. For example, a position of the manipulator 2 may be recorded each time the angle of each axis of the manipulator 2 changes by a predetermined angle (for example, 5 degrees), unnecessary positions may be eliminated as much as possible within a range where the posture of the welding torch can be smoothly changed, and remaining positions may be generated as waypoints.

When generating a plurality of waypoints between teaching points, a degree of change in the posture of the welding torch may be set such that the closer a waypoint is to the intermediate teaching point at a corner-winding, the greater the degree of change.

## Claims

1. A teaching apparatus (3), comprising:
a trajectory generating portion (311) that generates an operation trajectory of a welding robot (2), the operation trajectory starting at a predetermined position of a welding torch, and passing through a plurality of teaching points, and moreover ending at a predetermined position of the welding torch; and
a display control portion (312) that displays the generated operation trajectory by superimposing the operation trajectory on an object to be welded contained in an image captured by an imaging portion (4), wherein
the trajectory generating portion (311) generates one or more waypoints between each pair of adjacent teaching points.

2. The teaching apparatus (3) according to claim 1, wherein
the teaching point is taught by direct manipulation in which the welding robot (2) is moved and manipulated in response to external forces applied to the welding robot (2) by an operator.

3. The teaching apparatus (3) according to claim 1, wherein
the display control portion (312) visually differentiates a display mode of the waypoint from a display mode of the teaching point so that the waypoint stands out more prominently than the teaching point.

4. The teaching apparatus (3) according to claim 1, wherein
when generating a waypoint before or after an intermediate teaching point, which is a teaching point excluding teaching points at a start position of a weld and an end position of the weld, the trajectory generating portion (311) calculates a distance between the waypoint to be generated and the intermediate teaching point, based on a distance between another teaching point positioned adjacent on a near side or a far side of the intermediate teaching point and the intermediate teaching point or a welding speed.

5. The teaching apparatus (3) according to claim 1, wherein
when generating an approach point to be generated on a near side of a start position of a weld or a retreat point to be generated on a far side of an end position of the weld, the trajectory generating portion (311) generates the approach point or the retreat point by adjusting a movement direction of the welding torch so that the welding robot (2) can move without interfering with an object when moving the welding torch from the approach point toward the teaching point, which is to be the start position of the weld, or when moving the welding torch from the teaching point, which is to be the end position of the weld, toward the retreat point.

6. The teaching apparatus (2) according to claim 1, wherein
the display control portion (312) visually differentiates a display mode for an operation trajectory by air cutting, in which a welding torch is moved without generating an arc, from a display mode for the operation trajectory other than the operation trajectory by the air cutting.

7. The teaching apparatus (3) according to claim 6, wherein
when generating the operation trajectory by the air cutting, the trajectory generating portion (311) adjusts a movement direction of the welding torch so that the welding robot (2) operated by the air cutting does not interfere with an object.

8. The teaching apparatus (3) according to claim 1, wherein
the trajectory generating portion (311) generates, on the image, waypoints at positions indicated by an operator.

9. The teaching apparatus (3) according to claim 1, wherein
the trajectory generating portion (311) generates the waypoints by the number set by an operator between the teaching points.
